# NEUE EUROPÄISCHE PATENTSCHRIFT

(11) **EP 2 446 180 B2**
(45) Veröffentlichungstag und Bekanntmachung des Hinweises auf die Entscheidung über den Einspruch: **26.04.2017**
(45) Hinweis auf die Patenterteilung: 06.11.2013
(21) Anmeldenummer: 10730133.5
(22) Anmeldetag: 24.06.2010
(51) Int. Cl.: H01R 13/00, F16L 53/00, F16L 25/01, H05B 3/40

(54) **ELEKTRISCH BEHEIZBARE MEDIENLEITUNG SOWIE LEITUNGSVERBINDER**
ELECTRICALLY HEATABLE FLUID LINE AND LINE CONNECTOR
CONDUITE DE FLUIDE À CHAUFFAGE ÉLECTRIQUE AINSI QUE RACCORD DE CONDUITE

(30) Priorität: 23.06.2009 DE 202009008703 U; 24.06.2009 DE 202009008763 U; 10.09.2009 DE 202009012230 U
(43) Veröffentlichungstag der Anmeldung: 02.05.2012
(60) Teilanmeldung: 13185702.1
(73) Patentinhaber: Voss Automotive GmbH, 51688 Wipperfürth (DE)
(72) Erfinder: ROSENFELDT, Sascha, 44137 Dortmund (DE); LECHNER, Martin, 51789 Lindlar (DE); BRANDT, Josef, 51688 Wipperfürth (DE); HAGEN, Harald, 51688 Wipperfürth (DE); HILTEMANN, Ulrich, 42929 Wermelskirchen (DE); SIEPER, Günter, 42853 Remscheid (DE); BERGER, Markus, 51688 Wipperfürth (DE)
(74) Vertreter: Patent- und Rechtsanwälte Dr. Solf & Zapf
(86) Internationale Anmeldenummer: PCT/EP2010/059033
(87) Internationale Veröffentlichungsnummer: WO 2010/149757

(56) Entgegenhaltungen:
- EP-A1- 1 513 227
- WO-A1-2008/131993
- WO-A1-2008/131993
- WO-A2-2009/013342
- DE-A1- 3 837 851
- DE-U1- 29 715 336
- DE-U1-202007 010 502
- DE-U1-202007 018 086

## Beschreibung

Die vorliegende Erfindung betrifft eine elektrisch beheizbare Medienleitung gemäß dem Oberbegriff des Anspruchs 1.

Eine derart elektrisch beheizbare Medienleitung ist aus der DE 20 2007 018 086 U1 bekannt. Bei dieser bekannten Medienleitung weist das Gehäuse einen Abzweig mit einem elektrischen Anschlusselement auf, und zwar in Form eines Steckanschlusses für externe elektrische Leiter. Hierbei kann ein äußerer Anschlussstecker auf- oder eingesteckt und beispielsweise über Rastmittel arretiert werden. Das Anschlusselement ist innerhalb des Abzweiges am Ende der den Abzweig bildenden Kapselung befestigt und mit den Heizmitteln des Fluidverbinders und der angeschlossenen Fluidleitung verbunden. Bei dieser Ausführungsform endet die äußere elektrische Leitung am Anschlusselement, und diese wird nicht in das Gehäuse eingeführt.

Gattungsgemäße Medienleitungen können insbesondere in Kraftfahrzeugen für solche Medien eingesetzt werden, die aufgrund ihres Gefrierpunktes bereits bei relativ hohen, zumindest im Winter häufig vorkommenden Umgebungstemperaturen zum Gefrieren neigen. Dadurch können bestimmte Funktionen beeinträchtigt werden. Dies ist beispielsweise bei Wasserleitungen für die Scheibenwaschanlage der Fall, insbesondere aber bei Leitungen für eine wässrige Harnstofflösung, die als NO_{X}-Reduktionsadditiv für Dieselmotoren mit so genannten SCR-Katalysatoren eingesetzt wird. Deshalb können bei niedrigen Temperaturen die elektrischen Heizmittel aktiviert werden, um das Gefrieren zu vermeiden, oder um das bereits gefrorene Medium aufzutauen. Bei der Konfektionierung solcher Medienleitungen durch Verbinden mit mindestens einem Leitungsverbinder tritt häufig das Problem auf, dass die notwendigen elektrischen Leiter und Leiterverbindungen der Heizmittel beim Schließen des üblicherweise zweiteiligen äußeren Gehäuses des Leitungsverbinders störend zwischen die Gehäuseteile geraten können, weil sie-vergleiche dazu DE 20 2007 009 588 U1 - nur lose in einem Gehäusehohlraum untergebracht sind. Aus diesem Grund ist es zum Beispiel aus der DE 20 2007 018 089 und auch aus der DE 20 2007 018 086 U1 bekannt, die elektrischen Verbindungen mit einer Kunststoff-Formmasse zu umgeben, insbesondere durch Umspritzen oder Vergießen. Dies führt allerdings zu einem Fertigungs-Mehraufwand.

Der vorliegenden Erfindung liegt die Aufgabe zu Grunde, eine Medienleitung der eingangs beschriebenen Art so zu verbessern, dass bei einfacher und wirtschaftlicher Montage und Konfektionierung gute Gebrauchseigenschaften erreicht werden können.

Erfindungsgemäß wird dies durch die Merkmale des kennzeichnenden Teils des Anspruchs 1 erreicht. Vorteilhafte Ausgestaltungen sind in den abhängigen Ansprüchen sowie der nachfolgenden Beschreibung enthalten. Demnach ist erfindungsgemäß vorgesehen, dass das Gehäuse Fixiermittel zur rein mechanisch fixierenden Aufnahme des Fluidverbinders mit dem verbundenen Leitungsende sowie von elektrischen Leitern und Leiterverbindungen der Heizmittel aufweist. Durch diese Fixiermittel werden alle inneren Bestandteile mechanisch derart sicher fixiert, dass die Montage einfach und schnell durchführbar ist, ohne dass Teile, wie insbesondere elektrische Leiterabschnitte beim Schließen des Gehäuses zwischen die Gehäuseteile geraten könnten. Ein aufwändiges Vergießen oder Umspritzen ist nicht mehr notwendig. Durch die entfallende Kunststoff-Formmasse schließt das Gehäuse vorteilhafterweise ein bestimmtes Luftvolumen ein, und man erreicht damit eine verbesserte Effektivität der elektrischen Heizmittel.

Anhand der beiliegenden Zeichnungen soll die Erfindung beispielhaft genauer erläutert werden. Dabei zeigen:
- Fig. 1: eine vergrößerte Perspektivansicht eines Endbereiches einer erfindungsgemäßen Medienleitung mit einem erfindungsgemäßen Leitungsverbinder in einer bevorzugten Ausführungsform,
- Fig. 2: eine Perspektivansicht wie in Fig. 1, jedoch mit geöffnetem Gehäuse des Leitungsverbinders und ohne Darstellung von Heizmitteln und deren Bestandteilen,
- Fig. 3: eine Seitenansicht zu Fig. 2 mit zusätzlicher Darstellung von äußeren elektrischen Anschlussleitern und Leiterverbindungen,
- Fig. 4: eine Ansicht wie in Fig. 3 mit beispielhafter Darstellung der Heizmittel mit deren Bestandteilen,
- Fig. 4a: einen verkleinerten Querschnitt im Leitungsbereich in der Schnittebene IV-IV gemäß Fig. 4 ohne Darstellung der Fluidleitung,
- Fig. 5: eine perspektivische Darstellung von zwei Gehäuseteilen des Gehäuses des erfindungsgemäßen Leitungsverbinders im geöffneten Zustand zur Erläuterung des Schließvorganges,
- Fig. 6: eine Seitenansicht zu Fig. 1 mit einem zusätzlichen, mit dem Gehäuse verbundenen Abzweigteil für die Anschlussleiter,
- Fig. 7: eine Seitenansicht wie in Fig. 3 mit dem zusätzlichen Abzweigteil gemäß Fig. 6 im geöffneten Zustand,
- Fig. 8: einen vergrößerten Schnitt durch einen Teil des Gehäuses des Leitungsverbinders im Bereich einer Rastverbindung in einer ersten Ausführung,
- Fig. 9: einen Schnitt analog zu Fig. 8 in einer zweiten Ausführung der Rastverbindung,
- Fig. 10: eine Seitenansicht auf den Bereich der Rastverbindung in Pfeilrichtung X gemäß Fig. 8,
- Fig. 11: eine Perspektivansicht eines Teilausschnittes eines Gehäuseteils in einer besonderen Ausgestaltung,
- Fig. 12: eine Seitenansicht ähnlich Fig. 6 in einer alternativen Ausgestaltung des Leitungsverbinders und dessen Gehäuses,
- Fig. 13: eine vergrößerte Ansicht in Pfeilrichtung XIII gemäß Fig. 3, jedoch im geschlossenen Zustand des Gehäuses und in einer um 90° gedrehten Lage,
- Fig. 14: eine Darstellung wie Fig. 13, jedoch ohne Leitungs-Umhüllung,
- Fig. 15: eine Ausschnittvergrößerung des Bereiches XV in Fig. 3,
- Fig. 16: eine Ansicht ähnlich Fig. 1 in einer weiteren Ausgestaltung der erfindungsgemäßen Medienleitung,
- Fig. 17: eine gesonderte, vergrößerte Ansicht eines Einzelteils aus Fig. 16,
- Fig. 18: eine weitere Darstellung ähnlich Fig. 1 mit teilweise ausgespartem Gehäuse zur Einsicht auf eine weitere Ausgestaltung und
- Fig. 19: eine Ansicht ähnlich Fig. 2 in einer Aüsführüngsvariante zu Fig. 18.

In den verschiedenen Figuren der Zeichnung sind gleiche Teile stets mit den gleichen Bezugszeichen versehen.

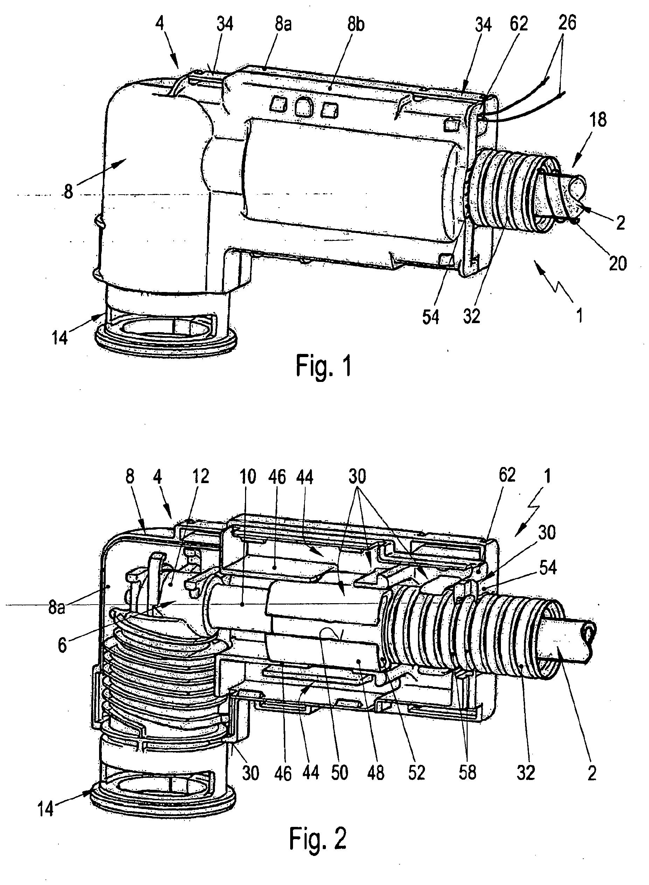

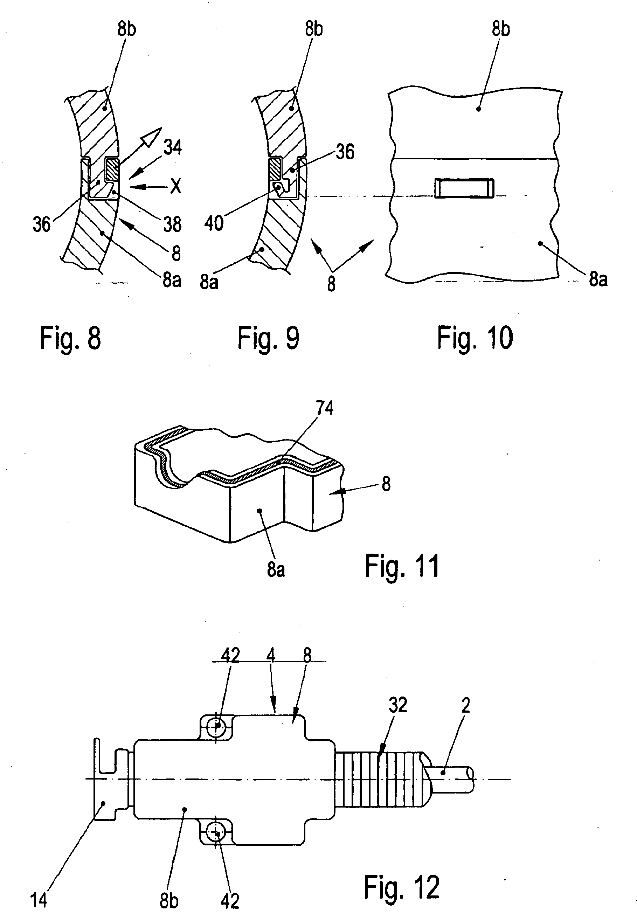

Eine erfindungsgemäße, konfektionierte und elektrisch beheizbare Medienleitung 1 besteht aus einer Fluidleitung 2, die zumindest einendig mit einem Leitungsverbinder 4 verbunden ist. Üblicherweise wird für die meisten Anwendungen die Fluidleitung 2 beidendig mit je einem Leitungsverbinder 4 verbunden. Dabei kann es sich bei jedem Leitungsverbinder 4 wahlweise um einen Winkelverbinder (Fig. 1 bis 7) oder um einen geradlinigen Verbinder handeln (beispielhaft in Fig. 12 dargestellt).

Der erfindungsgemäße Leitungsverbinder 4 besteht aus einem inneren Fluidverbinder 6 und einem äußeren Gehäuse 8. Der Fluidverbinder 6 weist mindestens einen Anschlussabschnitt 10 (s. hierzu insbesondere Fig. 2) zur mediendichten Anschlussverbindung mit einem Leitungsende der Fluidleitung 2 auf. An den Anschlussabschnitt 10 schließt sich ein Übergangsabschnitt 12 an, der vorzugsweise in einen zweiten Anschlussabschnitt 14 übergeht, der bevorzugt als Steckanschluss eines Fluid-Stecksystems ausgebildet ist. In den dargestellten Beispielen ist der Steckanschluss als Muffe zur Aufnahme eines nicht dargestellten Fluidsteckers ausgebildet. Alternativ kann der zweite Anschlussabschnitt 14 jedoch auch als Stecker ausgebildet sein. Außerdem kann der Fluidverbinder 6 auf der Seite des zweiten Anschlussabschnittes 14 auch entweder direkt mit einem beliebigen Aggregat verbunden oder analog zu dem ersten Anschlussabschnitt 10 zur Verbindung mit einer weiteren Fluidleitung ausgebildet sein. Durch den Fluidverbinder 6 verläuft ein innerer, die Anschlussabschnitte 10, 14 verbindender Fluidkanal.

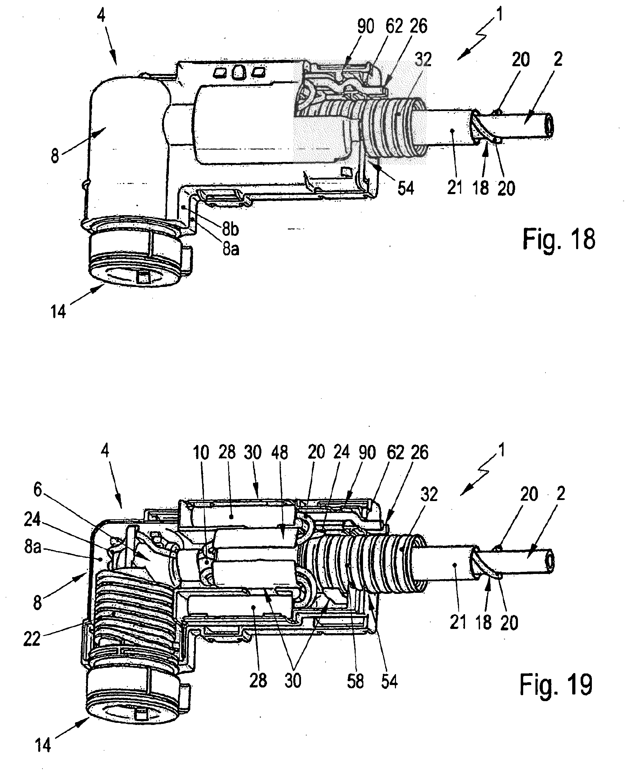

Die Fluidleitung 2 ist mit elektrischen Heizmitteln 18 insbesondere in Form von mindestens einem bevorzugt schraubenlinienförmig über den Umfang der Fluidleitung 2 verlaufenden Heizleiter 20 ausgestattet. Der oder die Heizleiter 20 können mittels einer die Fluidleitung 2 unter Einschluss der Heizleiter 20 eng umschließenden Fixierlage 21 (nur in Fig. 18 und 19 angedeutet), beispielsweise mittels mindestens eines schraubenlinienförmig um die Fluidleitung 2 gewickelten Klebebandes, oder auf andere geeignete Weise auf der Fluidleitung 2 fixiert sein.

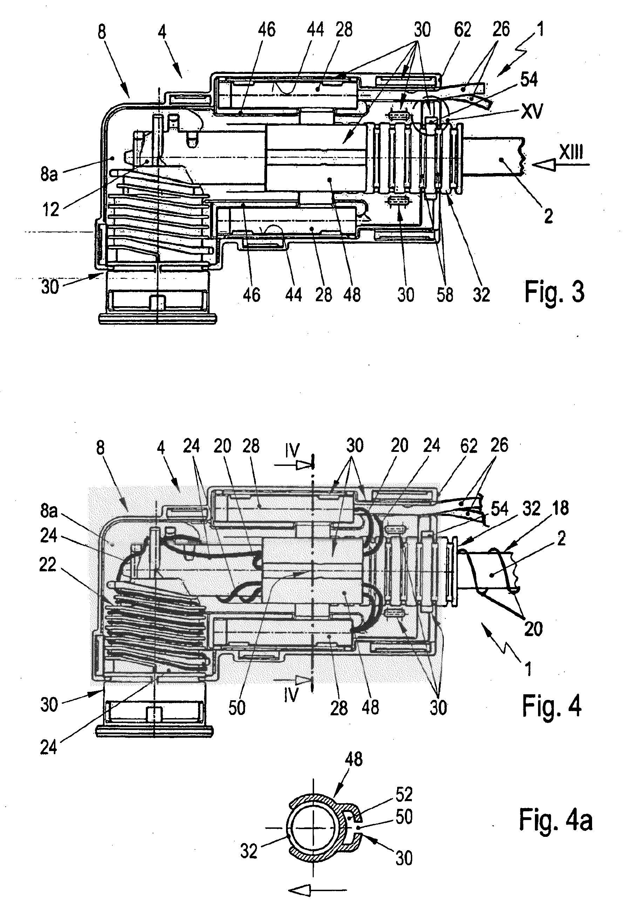

Weiterhin ist auch der Leitungsverbinder 4 bzw. der innere Fluidverbinder 6 mit elektrischen Heizmitteln 22 ausgestattet (siehe Fig. 4), die ebenfalls von mindestens einem über die Außenfläche des Fluidverbinders 6 verlaufenden Heizleiter 24 gebildet sind. Zweckmäßig besteht auch der Heizleiter 24 aus einem gewickelten Hinleiter und einem ebenfalls gewickelten oder auf kurzem Weg geführten Rückleiter.

Wie sich nun weiterhin aus Fig. 4 ergibt, sind im Übergangsbereich zwischen der Fluidleitung 2 und dem Fluidverbinder 6 Enden der Heizleiter 20, 24 miteinander und mit äußeren Anschlussleitern 26 über elektrische Leiterverbindungen 28 verbunden (verschaltet).

Hierbei ist der Fluidverbinder 6 zumindest im Bereich seiner Heizmittel 22 und zusammen mit einem Endabschnitt der Fluidleitung 2 kapselartig von dem Gehäuse 8 umschlossen.

Erfindungsgemäß weist hierbei das Gehäuse 8 Fixiermittel 30 zur ausschließlich mechanisch fixierenden Aufnahme des Fluidverbinders 6 mit dem verbundenen Leitungsende der Fluidleitung 2 sowie der Leiterverbindungen 28 mit den zugehörigen Heizleitern 20, 24 und Anschlussleitern 26 auf.

Die Fluidleitung 2 ist zusammen mit ihren Heizmitteln 18 von einer rohr- oder schlauchartigen Umhüllung 32 umschlossen. Erfindungsgemäß nehmen die Fixiermittel 30 des Gehäuses 8 auch einen Endbereich der Umhüllung 32 fixierend auf. In bevorzugter Ausgestaltung ist die Umhüllung 32 von einem Wellrohr (parallel gewelltes Schutzrohr insbesondere aus Kunststoff) gebildet.

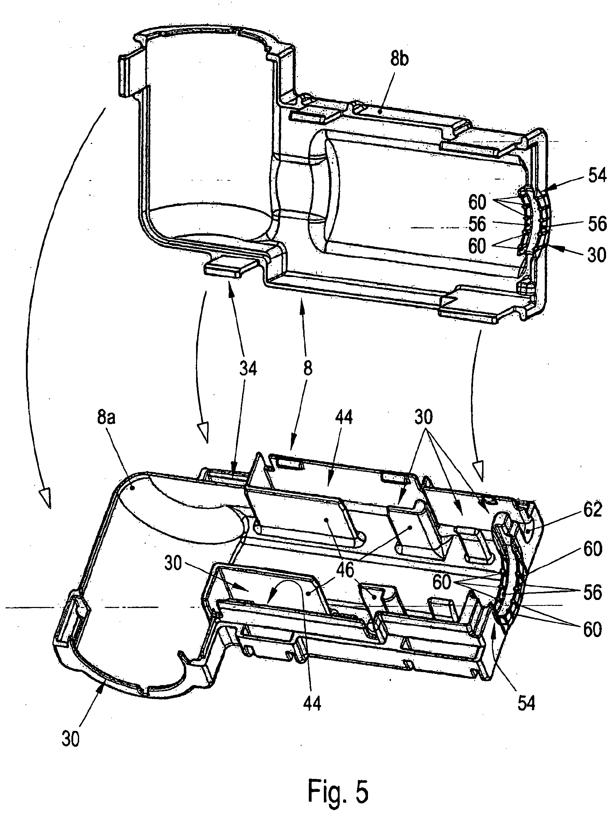

Wie sich insbesondere aus Fig. 5 ergibt, besteht das Gehäuse 8 derart aus (mindestens) zwei insbesondere halbschalenartigen Gehäuseteilen 8a und 8b, dass in einem geöffneten Zustand alle Bestandteile in das erste, als Unterteil ausgebildete Gehäuseteil 8a einsetzbar sind, so dass schon vor dem Schließen des Gehäuses 8 durch Aufsetzen des zweiten, als Oberteil ausgebildeten Gehäuseteils 8b alle inneren Bestandteile über die Fixiermittel 30 im Gehäuse 8 fixiert sind. In dem nachfolgend geschlossenen Zustand sind die Gehäuseteile 8a und 8b bevorzugt unlösbar, d. h. nicht zerstörungsfrei oder nur durch Einsatz eines Spezialwerkzeuges trennbar, miteinander verbunden. Hierdurch wird ein unberechtigtes Öffnen vermieden. In den bevorzugten Ausführungen gemäß Fig. 1 bis 10 sind die Gehäuseteile 8a, 8b über formschlüssige, nicht zerstörungsfrei zu lösende Rastverbindungen 34 verbunden. Diese Rastverbindungen 34 bestehen jeweils aus einem Rastelement, welches im geschlossenen Zustand eine Rastkante formschlüssig mit einem Hinterschneidungswinkel ≥ 90° hintergreift. Hierzu wird insbesondere auf Fig. 8 bis 10 verwiesen. Gemäß Fig. 8 greift ein Rastansatz 36 des einen Gehäuseteils (z. B. 8b) in eine Rastausnehmung 38 des anderen Gehäuseteils (z. B. 8a) formschlüssig ein. Dabei ist die Rastausnehmung 38 derart gestaltet, dass sich das Material beim Einrasten in Pfeilrichtung elastisch verformen muss. Deshalb ist nachfolgend ein Lösen nicht mehr zerstörungsfrei möglich. Im Falle der Alternative nach Fig. 9 weist der Rastansatz 36 eine Federzunge 40 auf, die bei geschlossenem Gehäuse 8 nicht mehr zum Lösen von außen zugänglich ist, weil sie in das Gehäuse-Innere weist.

In Fig. 12 ist alternativ dargestellt, dass die Gehäuseteile des Gehäuses 8 über nicht, zumindest nicht ohne ein Spezialwerkzeug, lösbare Verschraubungen 42 verbunden sind.

Was nun die erfindungsgemäßen Fixiermittel 30 betrifft, so weist das Gehäuse 8 zur Fixierung der elektrischen Leiterverbindungen 28 mindestens eine Aufnahmekammer 44, vorzugsweise aber zwei beidseitig parallel neben dem Leitungs-Anschlussbereich angeordnete Aufnahmekammern 44 auf. Hierzu wird insbesondere auf Fig. 2 und 5 verwiesen. Die bezüglich der angeschlossenen Fluidleitung 2 und des Anschlussabschnittes 10 beidseitig vorzugsweise diametral gegenüberliegenden Aufnahmekammern 44 werden nach innen hin von Trennwänden 46 begrenzt, die bezüglich ihres gegenseitigen Abstandes so bemessen sein können, dass sie zwischen sich auch den Anschlussabschnitt 10 mit der Fluidleitung 2 bzw. deren Umhüllung 32 kraftschlüssig fixieren. Die elektrischen Leiterverbindungen 28 sind beispielsweise jeweils von einem länglichen, metallischen Verbinderelement gebildet, wobei jedes Verbinderelement von einer elektrisch isolierenden Umhüllung umgeben ist und gemeinsam mit der Umhüllung zur Fixierung und Leiter-Zugentlastung kraft- und/oder formschlüssig in die jeweilige Aufnahmekammer 44 des Gehäuses 8 eingesetzt ist. Eine zusätzliche Leiter-Zugentlastung kann optional durch eine Umschlingung der Umhüllung 32 der Fluidleitung 2 oder durch Verlegung in Mäanderform erreicht werden. Bevorzugt sind die Leiterverbindungen 28 jeweils als Crimp-Verbinder ausgebildet. Alternativ oder zusätzlich kann es sich aber auch um Löt- oder Schweißverbinder handeln. Beispielsweise kann ein erster Leiter durch Vercrimpen angeschlossen werden, und mindestens ein zweiter Leiter kann angeschweißt werden. Jede Leiterverbindung 28 kann auch als so genannte Spitzverbindung durch direktes Verdrillen von Drahtenden mit einer Isolierhülle, insbesondere einem Schrumpfschlauch, gebildet sein. In der/jeder Aufnahmekammer 44 können bevorzugt mehrere (mindestens zwei) Leiterverbindungen 28 untergebracht werden.

Zur elektrischen Isolierung wird bevorzugt jede Leiterverbindung 28 mit einer Umhüllung aus einem Schrumpfschlauch versehen. Speziell kann es sich um einen Schrumpfschlauch mit Innenkleber handeln, der thermisch aufgeschrumpft wird und sich dann stoffschlüssig mit dem elektrischen Verbinderelement und/oder mit den Leitern verbindet. Die über die Fixiermittel 30 im Gehäuse 8 fixierte Schrumpfschlauch-Umhüllung kann dadurch Zugkräfte zur Zugentlastung aufnehmen.

Weiter ist als Fixiermittel 30 für die innerhalb des Gehäuses 8 verlaufenden elektrischen Leiter (insbesondere Heizleiter 20, 24) ein gesondertes Fixierteil 48 in das Gehäuse 8 eingesetzt. Dieses Fixierteil 48 ist vorzugsweise als Clip seitlich auf die Umhüllung 32 der Fluidleitung 2 aufgerastet, wobei das Fixierteil 48 eine im Querschnitt etwa C-förmige und eine schlitzartige Leiter-Einführöffnung 50 aufweisende Aufnahme 52 für die zu fixierenden Leiter 20, 24 aufweist. Hierzu wird besonders auch auf den Schnitt in Fig. 4a verwiesen. Die Anordnung des Fixierteils 48 innerhalb des Gehäuses 8 ist so, dass die Leiter-Einführöffnung 50 nach dem Schließen des Gehäuses 8 durch das aufgesetzte Oberteil 8b verschlossen wird.

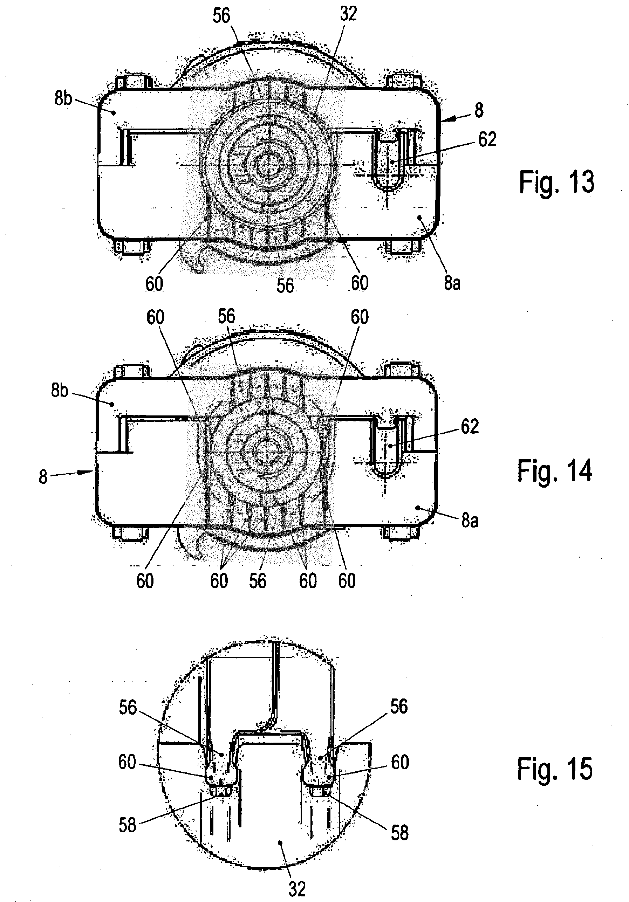

Das Gehäuse 8 weist weiterhin als Fixiermittel 30 für die Umhüllung 32 der Fluidleitung 2 einen derart ausgebildeten Aufnahmeabschnitt 54 auf, dass die Umhüllung 32 sowohl gegen Bewegungen in Längsrichtung als auch gegen Verdrehungen um ihre Längsachse fixiert ist. Bei der bevorzugten Ausgestaltung der Umhüllung 32 als Wellrohr weist der Aufnahmeabschnitt 54 eine Eingriffskontur mit inneren Umfangsrippen 56 auf, die radial in umfängliche Rillen 58 der Wellrohr-Umhüllung 32 eingreifen. Hierbei weisen die Umfangsrippen 56 gemäß Fig. 5 zahnartige Ansätze 60 auf, die kraft- und/oder formschlüssig gegen Rillenflanken der Rillen 58 der Wellrohr-Umhüllung 32 wirken. Wie sich besonders auch aus Fig. 13 bis 15 ergibt, verlaufen die Ansätze 60 im Wesentlichen senkrecht zur Teilungsebene der Gehäuseteile 8a, 8b, wobei jeweils zwei äußere Ansätze 60 des unteren Gehäuseteils 8a tangential durch eine der Rillen 58 der Wellrohr-Umhüllung 32 verlaufen (siehe Fig. 13 und 14 sowie auch Fig. 15). Durch die Ansätze 60 können bei besonderer Ausführung auch textile Umhüllungen fixiert werden.

In der ersten Ausführungsform gemäß Fig. 1 bis 5 weist das Gehäuse 8 mindestens eine Durchführöffnung 62 für den oder die Anschlussleiter 26 auf. Die Anschlussleiter 26 können dann extern an eine elektrische Versorgungsspannung angeschlossen werden.

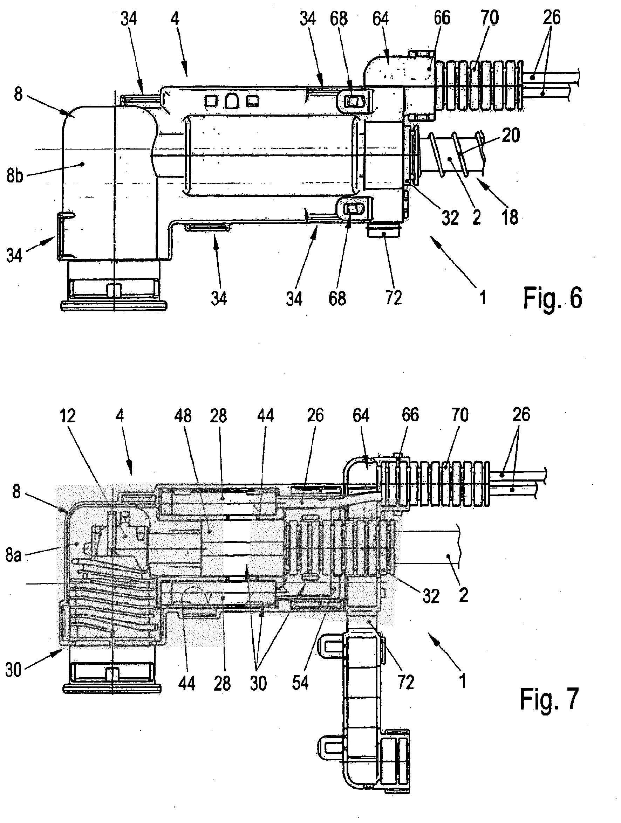

In der Ausgestaltung gemäß Fig. 6 und 7 ist ein separates, mit dem Gehäuse 8 verbundenes oder verbindbares Abzweigteil 64 mit einem Abzweig 66 für den/die Anschlussleiter 26 vorgesehen. Hierzu wird ergänzend auf die ältere Gebrauchsmusteranmeldung DE 20 2008 004 954.7 verwiesen. Das Abzweigteil 64 ist mit dem Gehäuse 8 insbesondere über Rastmittel 68 verbunden. Das Abzweigteil 64 ist im Bereich des Abzweiges 66 zur fixierenden Aufnahme eines Endbereiches einer-insbesondere von einem Wellrohr gebildeten - Leiterhülle 70 für den/die Anschlussleiter 26 ausgebildet. Gemäß Fig. 7 besteht das Abzweigteil 64 aus zwei Gehäusehälften, die bevorzugt über ein Filmscharnier 72 so einstückig miteinander verbunden sind, dass sie zum Schließen einfach zusammengeklappt und miteinander verrastet werden können. Dabei umschließt das Abzweigteil 64 dann vorzugsweise auch die Umhüllung 32 der Fluidleitung 2. Die Fixierung der Leiterhülle 70 in dem Abzweig 66 kann grundsätzlich analog zu der Fixierung der Umhüllung 32 in dem Aufnahmeabschnitt 54 des Gehäuses 8 erfolgen.

An dieser Stelle sei noch bemerkt, dass die beiden Gehäuseteile 8a und 8b des Gehäuses 8 auch gegeneinander über eine umlaufende Dichtung 74 abgedichtet sein können, wie dies beispielhaft in Fig. 11 veranschaulicht ist. Entsprechendes gilt bei Bedarf auch für das Abzweigteil 64.

Die Umhüllung 32 der Fluidleitung 2 ist in ihrem Endbereich innerhalb des Gehäuses 8 über Dichtmittel insbesondere aus Butylkautschuk relativ zu der Fluidleitung 2 und/oder zu dem Fluidverbinder 6 abgedichtet. Alternativ dazu kann hier auch ein Formdichtring, beispielsweise als Formteil aus einem geeigneten Werkstoff, wie HNBR, vorgesehen sein. Hierbei müssen lediglich die Heizdrähte durch Öffnungen gefädelt werden. Eine weitere Alternative besteht darin, eine Abdichtung mittels PU-Schaum oder dergleichen vorzusehen. Schließlich kann die Umhüllung 32 auch mittels eines Schrumpfschlauches gegen den Fluidverbinder 6 abgedichtet werden.

Als Leiterverbindungen 28 können auch so genannte Doppelcrimpverbinder verwendet werden, wobei jeder Leiter einzeln in einem Crimpabschnitt gecrimpt wird, wobei die Crimpabschnitte über einen Verbindungsabschnitt verbunden sind. Beispielsweise kann es sich um einen zunächst etwa H-förmigen Blechzuschnitt handeln, wobei im Bereich der senkrechten H-Stege jeweils ein Leiter gecrimpt werden kann. Der Quersteg der H-Form bildet den Verbindungsabschnitt.

In weiterer vorteilhafter Ausgestaltung kann zum Anschluss der Anschlussleiter 26 ein Elektro-Steckverbinder im Gehäuse 8 oder in dem Abzweigteil 64 integriert sein (in der Zeichnung nicht dargestellt).

Es ist ferner vorteilhaft, wenn alle vorhandenen Heizleiter und insbesondere auch die Anschlussleiter mit einem gleichen Außendurchmesser ausgebildet sind. Dabei können dennoch die Querschnitte der vorhandenen Heizdrähte variieren, indem dann auch die Wandstärke der Leiterisolierung entsprechend variiert.

Zweckmäßig weist das Gehäuse 8 auch im Bereich des Fluidverbinders 6 und insbesondere des zweiten Anschlussabschnittes 14 Fixiermittel insbesondere in Form von nach innen ragenden Stegen auf, die in nutartige Ausnehmungen (Hinterschnitte) des Fluidverbinders 6 eingreifen. Hierzu wird beispielsweise auf Fig. 2 bis 4 verwiesen.

Das Abzweigteil 64 kann bezüglich der Abgangsrichtung des Abzweiges 66 beliebig ausgeführt sein. Gemäß Fig. 6 und 7 weist der Abzweig 66 eine Abgangsrichtung parallel zur Fluidleitung 2 auf. Dadurch verläuft die Leiterhülle 70 parallel zur Fluidleitung 2 und deren Umhüllung 32. Alternativ kann das Abzweigteil 64 auch so ausgebildet sein, dass die Leiterhülle 70 in einem beliebigen anderen Winkel zur Leitungsachse der Fluidleitung 2 verläuft, beispielsweise 90° oder 45°.

Ergänzend sei noch bemerkt, dass als Heizdraht zum Bewickeln des Fluidverbinders 6 auch eine Überlänge des Heizdrahtes 20 der Fluidleitung 2 verwendet werden kann. Auf diese Weise kann eine Leiterverbindung (insbesondere Crimpverbindung) eingespart werden.

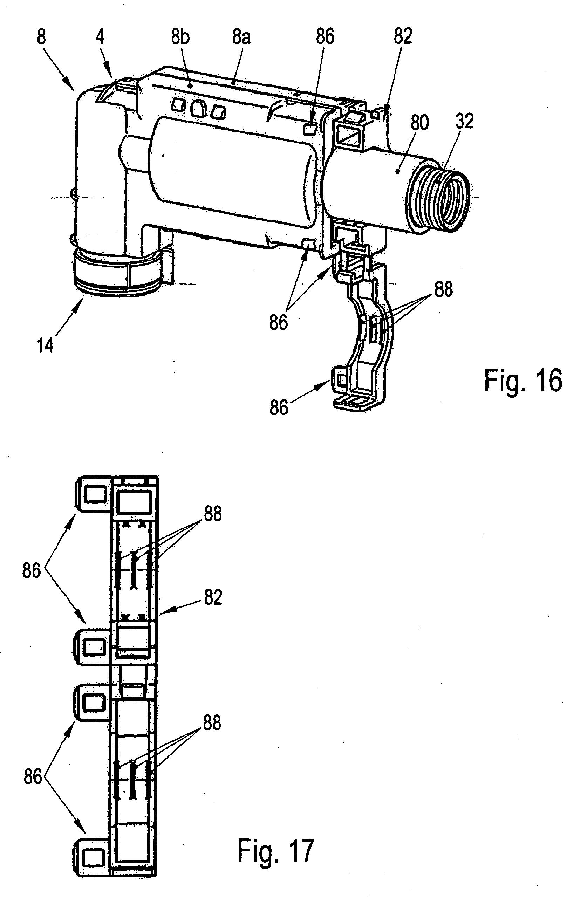

In der in Fig. 16 und 17 veranschaulichten Ausgestaltung ist die Fluidleitung 2 von einer zusätzlichen Wärmeschutzhülle 80 umschlossen, und zwar vorzugsweise unter Einschluss auch der Umhüllung 32. In Fig. 16 ist lediglich ein kurzer Endbereich der Wärmeschutzhülle 80 dargestellt, sie kann sich aber über die gesamte Länge oder zumindest über eine Teil-Länge der Fluidleitung 2 erstrecken. Hierbei ist die Wärmeschutzhülle 80 zumindest mit einem Endbereich an oder in dem Gehäuse 8 des Leitungsverbinders 4 fixiert. In der dargestellten Ausführung gemäß Fig. 16 liegt die Wärmeschutzhülle 80 mit ihrer endseitigen Stirnfläche außen vor dem Gehäuse 8, sie kann aber auch in das Gehäuse 8 hineingeführt sein. Zur Fixierung ist zweckmäßig eine Halteklammer 82 vorgesehen, die gemäß Fig. 16 und 17 aus zwei vorzugsweise über ein Filmscharnier 84 verbundenen Hälften besteht, die so zusammengeklappt und miteinander verrastet werden können, dass dann die Halteklammer 82 die Wärmeschutzhülle 80 ringförmig umschließt und kraft- und/oder formschlüssig aufnimmt. Indem die Halteklammer 82 mit dem Gehäuse 8 insbesondere über Rastmittel 86 verbunden oder verbindbar ist, wird die Wärmeschutzhülle 80 relativ zu dem Gehäuse 8 fixiert. Bevorzugt sind die Rastmittel 86 analog zu den Rastmitteln 68 des Abzweigteils 64 ausgebildet. Für eine gute zumindest kraftschlüssige und/oder formschlüssige Halterung der Wärmeschutzhülle 80 können innerhalb der Halteklammer 82 rippen- oder zahnartige Elemente 88 angeordnet sein. Die Wärmeschutzhülle 80 kann auf ihrer Außenfläche eine korrespondierende rillenartige Profilierung (nicht dargestellt) aufweisen, in die die Elemente 88 radial eingreifen können.

Die Wärmeschutzhülle 80 besteht im Wesentlichen aus einer Metall-Folie, vorzugsweise einer Aluminium-Folie, wobei sie bevorzugt eine innere Verstärkung insbesondere aus einem aufkaschierten Glasgewebe aufweisen kann. Die Metall-Folie kann auch aus (ggf. hochlegiertem) Edelstahl sowie aus mehreren Lagen, z. B. einer ersten (inneren) Aluminiumlage und einer zweiten (äußeren) Edelstahllage bestehen.

Bei den in Fig. 18 und 19 dargestellten Ausführungsvarianten sind innerhalb des Gehäuses 8 besondere Mittel zur zugentlastenden Fixierung des/der Anschlussleiterls 26 gebildet, und zwar insbesondere in Form einer Umlenk-Klemmung 90, durch die der oder die Anschlussleiter 26 mindestens einfach (Fig. 19) oder bevorzugt mehrfach (Fig. 18) klemmend umgelenkt werden.

Die Durchführöffnung 62 für den oder die Anschlussleiter 26 kann mit einem zusätzlichen, in den Zeichnungen nicht erkennbaren Verschlusselement ausgestattet sein, welches die Anschlussleiter 26 elastisch abdichtend umschließt. Für eine Ausführung ohne Anschlussleiter 26 kann mit Vorteil ein ebenfalls nicht dargestelltes Verschlusselement, z. B. in Form eines Blindstopfens in die Durchführöffnung 62 eingesetzt werden, um das Gehäuse 8 an dieser Stelle dicht zu verschließen.

## Patentansprüche

1. Elektrisch beheizbare Medienleitung (1) mit einer Fluidleitung (2) und mindestens einem Leitungsverbinder (4), der aus einem mit einem Leitungsende der Fluidleitung (2) verbundenen Fluidverbinder (6) und einem äußeren Gehäuse (8) besteht, wobei die Fluidleitung (2) und der Leitungsverbinder (4) jeweils elektrische Heizmittel (18, 22) aufweisen, wobei die Heizmittel (22) des Fluidverbinders (6) von mindestens einem über seine Außenfläche hinweg verlaufenden Heizleiter (24) gebildet sind, wobei der Fluidverbinder (6) zumindest im Bereich seiner Heizmittel (22) und zusammen mit einem Endabschnitt der Fluidleitung (2) von dem Gehäuse (8) umschlossen ist, und wobei das Gehäuse (8) Fixiermittel (30) zur mechanisch fixierenden Aufnahme des Fluidverbinders (6) mit dem verbundenen Leitungsende sowie von elektrischen Leitern (20, 24 26) und Leiterverbindungen (28) der Heizmittel (18, 22) aufweist, wobei das Gehäuse (8) als Fixiermittel für die elektrischen Leiterverbindungen (28) mindestens eine Aufnahmekammer (44) aufweist, wobei die elektrischen Leiterverbindungen (28) jeweils von einem Verbinderelement gebildet sind, wobei jedes Verbinderelement zur Fixierung und Leiterzugentlastung kraft- und/oder formschlüssig in die Aufnahmekammer des Gehäuses eingesetzt ist, und wobei die im Übergangsbereich zwischen der Fluidleitung (2) und dem Fluidverbinder (6) endenden elektrischen Heizleiter (20, 24) miteinander und mit den äußeren Leitern (26) über die in der Aufnahmekammer (44) befindlichen Leiterverbindungen (28) verbunden sind,
**dadurch gekennzeichnet, dass** als Fixiermittel (30) zur mechanisch fixierenden Aufnahme der innerhalb des Gehäuses (8) verlaufenden elektrischen Heizleiter (20, 24) ein gesondertes Fixierteil (48) in das Gehäuse (8) eingesetzt ist, wobei das Fixierteil (48) als Clip seitlich auf eine Umhüllung (32) der Fluidleitung (2) aufgesetzt ist und eine im Querschnitt etwa C-förmige Aufnahme (52) für die zu fixierenden Heizleiter (20, 24) aufweist.

2. Medienleitung nach Anspruch 1,
**dadurch gekennzeichnet, dass** die Fluidleitung (2) zusammen mit ihren Heizmitteln (18) von einer Umhüllung (32) umschlossen ist, wobei die Fixiermittel (30) des Gehäuses (8) auch einen Endbereich der Umhüllung (32) fixierend aufnehmen.

3. Medienleitung nach Anspruch 1 oder 2,
**dadurch gekennzeichnet, dass** das Gehäuse (8) derart aus mindestens zwei insbesondere halbschalenartigen Gehäuseteilen (8a, 8b) besteht, dass in einem geöffneten Zustand alle Bestandteile in das eine Gehäuseteil (8a) einsetzbar und darin fixierbar sind und in einem geschlossenen Zustand die Gehäuseteile (8a, 8b) vorzugsweise unlösbar verbunden sind.

4. Medienleitung nach Anspruch 3,
**dadurch gekennzeichnet, dass** die Gehäuseteile (8a, 8b) über formschlüssige Rastverbindungen (34) verbunden sind.

5. Medienleitung nach einem der Ansprüche 1 bis 4,
**dadurch gekennzeichnet, dass** das Gehäuse (8) als Fixiermittel (30) für die elektrischen Leiterverbindungen (28) zwei beidseitig parallel neben dem Leitungsbereich angeordnete Aufnahmekammern (44) aufweist.

6. Medienleitung nach einem der Ansprüche 1 bis 5,
**dadurch gekennzeichnet, dass** die Verbinderelemente (28) jeweils als Crimpverbinder und/oder als Löt- oder Schweißverbinder ausgebildet sind.

7. Medienleitung nach einem der Ansprüche 2 bis 6,
**dadurch gekennzeichnet, dass** das Gehäuse (8) als Fixiermittel (30) für die Umhüllung (32) der Fluidleitung (2) einen derart ausgebildeten Aufnahmeabschnitt (54) aufweist, dass die Umhüllung (32) sowohl gegen Bewegung in Längsrichtung als auch gegen Verdrehung um ihre Längsachse fixiert ist.

8. Medienleitung nach Anspruch 7,
**dadurch gekennzeichnet, dass** der die - insbesondere von einem Wellrohr gebildete - Umhüllung (32) fixierend aufnehmende Aufnahmeabschnitt (54) eine Eingriffskontur mit radial in umfängliche Rillen (58) der Umhüllung (32) eingreifenden Umfangsrippen (56) aufweist, wobei die Umfangsrippen (56) zahnartige Ansätze (60) aufweisen, die kraft- und/oder formschlüssig gegen die Umhüllung (32) wirken.

9. Medienleitung nach einem der Ansprüche 1 bis 8,
**dadurch gekennzeichnet, dass** die Heizmittel (18) der Fluidleitung (2) von mindestens einem insbesondere schraubenlinienförmig über ihren Umfang verlaufenden Heizleiter (20) gebildet sind.

10. Medienleitung nach einem der Ansprüche 1 bis 9,
**dadurch gekennzeichnet, dass** mindestens ein elektrischer Anschlussleiter (26) von außen in das Gehäuse (8) geführt ist und über eine der elektrischen Leiterverbindungen (28) mit den Heizmitteln (18/22) leitend verbunden ist.

11. Medienleitung nach Anspruch 10,
**dadurch gekennzeichnet, dass** das Gehäuse (8) mindestens eine Durchführöffnung (62) für den/die Anschlussleiter (26) aufweist.

12. Medienleitung nach Anspruch 10 oder 11,
**gekennzeichnet durch** ein separates, mit dem Gehäuse (8) verbundenes oder verbindbares Abzweigteil (64) mit einem Abzweig (66) für den/die Anschlussleiter (26).

13. Medienleitung nach Anspruch 12,
**dadurch gekennzeichnet, dass** das Abzweigteil (64) zur fixierenden Aufnahme eines Endbereiches einer - insbesondere von einem Wellrohr gebildeten - Leiterhülle (70) für den/die Anschlussleiter (26) ausgebildet ist.

14. Medienleitung nach einem der Ansprüche 2 bis 13,
**dadurch gekennzeichnet, dass** die Umhüllung (32) der Fluidleitung (2) in ihrem Endbereich innerhalb des Gehäuses (8) über Dichtmittel (76) relativ zu der Fluidleitung (2) und/oder zu dem Fluidverbinder (6) abgedichtet ist.

15. Medienleitung nach einem der Ansprüche 3 bis 14,
**dadurch gekennzeichnet, dass** die Gehäuseteile (8a, 8b) des Gehäuses (8) gegeneinander über eine umlaufende Dichtung (74) abgedichtet sind.

16. Medienleitung nach einem der Ansprüche 1 bis 15,
**dadurch gekennzeichnet, dass** die Fluidleitung (2) über ihre gesamte Länge oder zumindest über eine Teil-Länge von einer Wärmeschutzhülle (80) umschlossen ist, und zwar vorzugsweise unter Einschluss der Umhüllung (32).

17. Medienleitung nach Anspruch 16,
**dadurch gekennzeichnet, dass** die Wärmeschutzhülle (80) zumindest mit einem Endbereich an oder in dem Gehäuse (8) des Leitungsverbinders (4) fixiert ist, wobei bevorzugt eine Halteklammer (82) die Wärmeschutzhülle (80) kraft- und/oder formschlüssig aufnimmt und mit dem Gehäuse (8) insbesondere über Rastmittel (86) verbunden oder verbindbar ist.

18. Medienleitung nach Anspruch 16 oder 17,
**dadurch gekennzeichnet, dass** die Wärmeschutzhülle (80) im Wesentlichen aus einer insbesondere gewebeverstärkten Metall-Folie, vorzugsweise aus einer Aluminium-Folie, besteht.

19. Medienleitung nach einem der Ansprüche 10 bis 18,
**dadurch gekennzeichnet, dass** innerhalb des Gehäuses (8) Mittel zur zugentlastenden Fixierung des/der Anschlussleiter/s (26), insbesondere in Form einer Umlenk-Klemmung (90), gebildet sind.

20. Medienleitung nach einem der Ansprüche 11 bis 19,
**gekennzeichnet durch** ein Verschlusselement zum dichtenden Verschließen der/jeder Durchführöffnung (62) mit oder ohne Anschlussleiter (26).

## Claims

1. An electrically heatable media line (1) having a fluid line (2) and at least one line connector (4) composed of a fluid connector (6), connected to a line end of the fluid line (2), and an outer housing (8), wherein the fluid line (2) and the line connector (4) each have electrical heating means (18, 22), wherein the heating means (22) of the fluid connector (6) are formed by at least one heating conductor (24) running over its outer surface, wherein the fluid connector (6) is, at least in the region of its heating means (22) and together with an end portion of the fluid line (2), enclosed by the housing (8), and wherein the housing (8) has fixing means (30) to receive, in a mechanically fixing manner, the fluid connector (6) with the connected line end as well as electrical conductors (20, 24, 26) and conductor connections (28) of the heating means (18, 22), wherein the housing (8) has at least one receiving chamber (44) as a fixing means for the electrical conductor connections (28), wherein the electrical conductor connections (28) are in each case formed by a connector element, wherein each connector element is inserted into the receiving chamber of the housing in a force-locked and/or form-locked manner for the purpose of fixing and to relieve strain on the conductor, and wherein the electrical heating conductors (20, 24) ending in the transition region between the fluid line (2) and the fluid connector (6) are connected to one another and to the outer conductors (26) via the conductor connections (28) located in the receiving chamber (44),
**characterised in that** a separate fixing part (48) is inserted into the housing (8) as a fixing means (30) to receive, in a mechanically fixing manner, the electrical heating conductors (20, 24) running within the housing (8), wherein the fixing part (48) is placed laterally on a sheath (32) of the fluid line (2) in the form of a clip and has a receiver (52) of substantially C-shaped cross-section for the heating conductors (20, 24) to be fixed.

2. A media line according to claim 1,
**characterised in that** the fluid line (2) together with its heating means (18) is enclosed by a sheath (32), wherein the fixing means (30) of the housing (8) also receive an end region of the sheath (32) in a fixing manner.

3. A media line according to claim 1 or 2,
**characterised in that** the housing (8) is composed of at least two, in particular half-shell-like, housing parts (8a, 8b) in such a manner that all component parts are insertable into the one housing part (8a) and can be fixed therein in an opened state and the housing parts (8a, 8b) are preferably connected in an undetachable manner in a closed state.

4. A media line according to claim 3,
**characterised in that** the housing parts (8a, 8b) are connected via form-locked locking connections (34).

5. A media line according to any one of claims 1 to 4,
**characterised in that** as a fixing means (30) for the electric conductor connections (28), the housing (8) has two receiving chambers (44) arranged on both sides in a parallel manner beside the line region.

6. A media line according to any one of claims 1 to 5,
**characterised in that** the connector elements (28) are in each case in the form of crimp connectors and/or solder or weld connectors.

7. A media line according to any one of claims 2 to 6,
**characterised in that** the housing (8) has as a fixing means (30) for the sheath (32) of the fluid line (2) a receiving portion (54) formed in such a manner that the sheath (32) is fixed both against movement in the longitudinal direction and against rotation about its longitudinal axis.

8. A media line according to claim 7,
**characterised in that** the receiving portion (54) receiving the sheath (32) - in particular formed by a corrugated pipe - in a fixing manner has an engaging contour with circumferential ribs (56) engaging radially in circumferential grooves (58) of the sheath (32), wherein the circumferential ribs (56) have tooth-like lugs (60) which act in a force-locked and/or form-locked manner against the sheath (32).

9. A media line according to any one of claims 1 to 8,
**characterised in that** the heating means (18) of the fluid line (2) are formed by at least one heating conductor (20), running in particular helically over its circumference.

10. A media line according to any one of claims 1 to 9,
**characterised in that** at least one electrical connecting conductor (26) is guided into the housing (8) from the exterior and is connected to the heating means (18/22) in a conductive manner via one of the electrical conductor connections (28).

11. A media line according to claim 10,
**characterised in that** the housing (8) has at least one feed-through opening (62) for the connecting conductor(s) (26).

12. A media line according to claim 10 or 11,
**characterised by** a separate branch part (64), connected or connectable to the housing (8), with a branch (66) for the connecting conductor(s) (26).

13. A media line according to claim 12,
**characterised in that** the branch part (64) is designed to receive in a fixing manner an end region of a conductor casing (70) - in particular formed by a corrugated pipe - for the connecting conductors (26).

14. A media line according to any one of claims 2 to 13,
**characterised in that** the end region of the sheath (32) of the fluid line (2) is within the housing (8) sealed relative to the fluid line (2) and/or to the fluid connector (6) via sealing means (76).

15. A media line according to any one of claims 3 to 14,
**characterised in that** the housing parts (8a, 8b) of the housing (8) are sealed in relation to one another by a circumferential seal (74).

16. A media line according to any one of claims 1 to 15,
**characterised in that** the fluid line (2) is enclosed over its entire length, or at least over part of its length, by a heat protective casing (80), namely preferably with the inclusion of the sheath (32).

17. A media line according to claim 16,
**characterised in that** the heat protective casing (80) is, at least with one end region, fixed on or in the housing (8) of the line connector (4), wherein preferably a holding clamp (82) receives the heat protective casing (80) in a force-locked and/or form-locked manner and is connected or connectable to the housing (8), in particular via locking means (86).

18. A media line according to claim 16 or 17,
**characterised in that** the heat protective casing (80) is composed substantially of an in particular fabric-reinforced metal foil, preferably of an aluminium foil.

19. A media line according to any one of claims 10 to 18,
**characterised in that** within the housing (8) there are formed means for the strain-relieving fixing of the connecting conductor(s) (26), in particular in the form of a deflection clamp (90).

20. A media line according to any one of claims 11 to 19,
**characterised by** a closure element for the sealing closure of the/each feed-through opening (62) with or without connecting conductor (26).

## Revendications

1. Conduite de milieu (1) à chauffage électrique comprenant une conduite de fluide (2) et au moins un raccord de conduite (4), qui est constitué d'un raccord de fluide (6) relié à une extrémité de conduite de la conduite de fluide (2) et d'un boîtier (8) extérieur, dans laquelle la conduite de fluide (2) et le raccord de conduite (4) présentent respectivement des moyens chauffants (18, 22) électriques, dans laquelle les moyens chauffants (22) du raccord de fluide (6) sont formés par au moins un conducteur chauffant (24) s'étendant au-delà de la surface extérieure dudit raccord de fluide, dans laquelle le raccord de fluide (6) est entouré au moins dans la zone de ses moyens chauffants (22) et conjointement avec une section d'extrémité de la conduite de fluide (2) par le boîtier (8), et dans laquelle le boîtier (8) présente des moyens de fixation (30) servant à recevoir le raccord de fluide (6) tout en assurant sa fixation mécanique avec l'extrémité de conduite reliée, et servant à recevoir des conducteurs (20, 24, 26) électriques et des raccordements de conducteur (28) des moyens chauffants (18, 22), dans laquelle le boîtier (8) présente en tant que moyen de fixation pour les raccordements de conducteur (28) électriques, au moins une chambre de réception (44), dans laquelle les raccordements de conducteur (28) électriques sont respectivement formés par un élément de raccord, dans laquelle chaque élément de raccord servant à la fixation et à la décharge de traction de conducteur est inséré à force et/ou par complémentarité de forme dans la chambre de réception du boîtier, et dans laquelle les conducteurs chauffants (20, 24) électriques se terminant dans la zone de transition entre la conduite de fluide (2) et le raccord de fluide (6) sont reliés les uns aux autres et aux conducteurs (26) extérieurs par l'intermédiaire des raccordements de conducteur (28) se trouvant dans la chambre de réception (44),
**caractérisée en ce qu'**on insère dans le boîtier (8), comme moyen de fixation (30) servant à recevoir les conducteurs chauffants (20, 24) électriques s'étendant à l'intérieur du boîtier (8) tout en assurant leur fixation mécanique, une partie de fixation (48) séparée, dans laquelle la partie de fixation (48) est placée sous la forme d'un clip, latéralement, sur la gaine (32) de la conduite de fluide (2) et présente un système de réception (52) présentant approximativement une forme de C dans la section transversale pour les conducteurs (20, 24) devant être fixés.

2. Conduite de milieu selon la revendication 1,
**caractérisée en ce que** la conduite de fluide (2) ainsi que ses moyens chauffants (18) sont entourés d'une gaine (32), dans laquelle les moyens de fixation (30) du boîtier (8) reçoivent par fixation également une zone d'extrémité de la gaine (32).

3. Conduite de milieu selon la revendication 1 ou 2,
**caractérisée en ce que** le boîtier (8) est constitué d'au moins deux parties de boîtier (8a, 8b) présentant en particulier une forme de demi-coque de telle manière que dans un état ouvert, tous les composants peuvent être insérés dans l'une (8a) des parties de boîtier et peuvent y être fixés, et que les parties de boîtier (8a, 8b) sont, dans un état fermé, reliées de préférence de manière inamovible.

4. Conduite de milieu selon la revendication 3,
**caractérisée en ce que** les parties de boîtier (8a, 8b) sont reliées par l'intermédiaire de systèmes d'assemblage par encliquetage (34) par complémentarité de forme.

5. Conduite de milieu selon l'une quelconque des revendications 1 à 4,
**caractérisée en ce que** le boîtier (8) présente, en tant que moyens de fixation (30) pour les raccordements de conducteur (28) électriques, deux chambres de réception (44) disposées de part et d'autre de manière parallèle à proximité de la zone de conduite.

6. Conduite de milieu selon l'une quelconque des revendications 1 à 5,
**caractérisée en ce que** les éléments de raccord (28) sont réalisés respectivement sous la forme de raccords de sertissage et/ou de raccords de brasage ou de soudage.

7. Conduite de milieu selon l'une quelconque des revendications 2 à 6,
**caractérisée en ce que** le boîtier (8) présente, en tant que moyen de fixation (30) pour la gaine (32) de la conduite de fluide (2), une section de réception (54) réalisée de telle manière que la gaine (32) est fixée de manière à empêcher aussi bien un mouvement dans la direction longitudinale que pour empêcher toute rotation autour de son axe longitudinal.

8. Conduite de milieu selon la revendication 7,
**caractérisée en ce que** la section de réception (54) recevant par fixation la gaine (32) - formée en particulier par un tube ondulé - présente un contour d'engrènement doté de nervures circonférentielles (56) venant en prise radialement avec des rainures (58) circonférentielles de la gaine (32), dans laquelle les nervures circonférentielles (56) présentent des épaulements (60) dentés, lesquels agissent contre la gaine (32) à force et/ou par complémentarité de forme.

9. Conduite de milieu selon l'une quelconque des revendications 1 à 8,
**caractérisée en ce que** les moyens chauffants (18) de la conduite de fluide (2) sont formés par au moins un conducteur chauffant (20) s'étendant sur la périphérie de ladite conduite de fluide de manière à présenter en particulier une forme de ligne hélicoïdale.

10. Conduite de milieu selon l'une quelconque des revendications 1 à 9,
**caractérisée en ce qu**'au moins un conducteur de connexion (26) électrique est guidé depuis l'extérieur dans le boîtier (8) et est relié de manière conductrice aux moyens chauffants (18/22) par l'intermédiaire d'un des raccordements de conducteur (28) électriques.

11. Conduite de milieu selon la revendication 10,
**caractérisée en ce que** le boîtier (8) présente au moins un orifice de passage (62) pour le/les conducteurs de connexion (26).

12. Conduite de milieu selon la revendication 10 ou 11,
**caractérisée par** une partie de dérivation (64) séparée, reliée ou pouvant être reliée au boîtier (8) dotée d'une dérivation (66) pour le ou les conducteurs de connexion (26).

13. Conduite de milieu selon la revendication 12,
**caractérisée en ce que** la partie de dérivation (64) est réalisée aux fins de la réception par fixation d'une zone d'extrémité d'une gaine de conducteur (70) - formée en particulier par un tube ondulé - pour le ou les conducteurs de connexion (26).

14. Conduite de milieu selon l'une quelconque des revendications 2 à 13,
**caractérisée en ce que** la gaine (32) de la conduite de fluide (2) est étanchéifiée dans sa zone d'extrémité à l'intérieur du boîtier (8) par l'intermédiaire de moyens d'étanchéité (76) par rapport à la conduite de fluide (2) et/ou au raccord de fluide (6).

15. Conduite de milieu selon l'une quelconque des revendications 3 à 14,
**caractérisée en ce que** les parties de boîtier (8a, 8b) du boîtier (8) sont étanchéifiées les unes par rapport aux autres par l'intermédiaire d'un joint d'étanchéité (74) périphérique.

16. Conduite de milieu selon l'une quelconque des revendications 1 à 15,
**caractérisée en ce que** la conduite de fluide (2) est entourée, sur toute sa longueur ou au moins sur une longueur partielle d'une gaine de protection thermique (80), et de préférence en incluant la gaine (32).

17. Conduite de milieu selon la revendication 16,
**caractérisée en ce que** la gaine de protection thermique (80) est fixée au moins par une zone d'extrémité au niveau du boîtier (8) du raccord de conduite (4) ou dans ledit boîtier, dans laquelle de préférence une pince de retenue (82) reçoit la gaine de protection thermique (80) à force et/ou par complémentarité de forme et est reliée ou peut être reliée au boîtier (8) en particulier par l'intermédiaire de moyens d'encliquetage (86).

18. Conduite de milieu selon la revendication 16 ou 17,
**caractérisée en ce que** la gaine de protection thermique (80) est constituée essentiellement d'un film métallique en particulier renforcé d'un tissu, de préférence d'un film en aluminium.

19. Conduite de milieu selon l'une quelconque des revendications 10 à 18,
**caractérisée en ce que** sont formés à l'intérieur du boîtier (8), des moyens servant à la fixation par décharge de traction du ou des conducteurs de connexion (26), en particulier sous la forme d'un serrage de renvoi (90).

20. Conduite de milieu selon l'une quelconque des revendications 11 à 19,
**caractérisée par** un élément de fermeture servant à fermer de manière étanche le ou chaque orifice de passage (62) avec ou sans conducteur de connexion (26).
